# EUROPÄISCHE PATENTANMELDUNG

(11) **EP 4 510 058 A1**
(43) Veröffentlichungstag der Anmeldung: **19.02.2025**
(21) Anmeldenummer: 24194463.6
(22) Anmeldetag: 14.08.2024
(51) Int. Cl.: G06Q 10/08, B66F 9/06, B66F 9/075

(54) **VORRICHTUNG ZUR ERFASSUNG UND HANDHABUNG UNTERSCHIEDLICHER TYPEN VON LADUNGSTRÄGERN AN EINEM UNTERFAHR-SHUTTLE**

(30) Priorität: 17.08.2023 DE 102023122082
(71) Anmelder: Jungheinrich AG, 22047 Hamburg (DE)
(72) Erfinder: Schöpp, Martin, 86415 Mering (DE); Leffler, Marius, 86551 Aichach (DE); Romano, Wolf, 80799 München (DE)
(74) Vertreter: Weickmann & Weickmann PartmbB

(57) **Zusammenfassung**

Die vorliegende Erfindung betrifft eine Vorrichtung (22) zur Erfassung und Handhabung unterschiedlicher Typen von Ladungsträgern an einem Unterfahr-Shuttle (10), umfassend eine erste Sensoranordnung (18), welche dazu eingerichtet ist, eine korrekte Aufnahme eines Ladungsträgers an einer Lastaufnahme-Plattform (14) des Unterfahr-Shuttles (10) zu erfassen und entsprechende erste Sensordaten auszugeben, eine zweite Sensoranordnung (20), welche von einem anderen Sensortyp als die erste Sensoranordnung (18) und dazu eingerichtet ist, Informationen bezüglich des Typs des Ladungsträgers zu erfassen und entsprechende zweite Sensordaten auszugeben, und eine Steuereinheit (24), welche mit der ersten Sensoranordnung (18) und der zweiten Sensoranordnung (20) betriebsmäßig gekoppelt ist, um die ersten und zweiten Sensordaten zu erhalten, wobei die Steuereinheit (24) dazu eingerichtet ist, bei einer von der ersten Sensoranordnung (18) erfassten korrekten Aufnahme des Ladungsträgers auf Grundlage des erfassten Typs des Ladungsträgers Steuersignale auszugeben, welche dazu vorgesehen sind, wenigstens einen Betriebsparameter des Unterfahr-Shuttles (10) anzupassen.

## Beschreibung

Die vorliegende Erfindung betrifft eine Vorrichtung zur Erfassung und Handhabung unterschiedlicher Typen von Ladungsträgern an einem Unterfahr-Shuttle, ein eine derartige Vorrichtung umfassendes Unterfahr-Shuttle, ein aus einem derartigen Unterfahr-Shuttle und einer Mehrzahl von Ladungsträgern unterschiedlicher Typen gebildetes System und ein Verfahren zur Erfassung und Handhabung unterschiedlicher Typen von Ladungsträgern an einem Unterfahr-Shuttle mittels einer erfindungsgemäßen Vorrichtung.

Im Rahmen der zunehmenden Automatisierung von Logistikeinrichtungen haben in jüngerer Zeit sogenannte Unterfahr-Shuttle zunehmend an Bedeutung gewonnen, die autonom oder halbautonom auf ihrer Oberseite Lasten transportieren können, wie beispielsweise unterschiedliche Typen von Paletten, Tischen oder Tablaren mit darauf getragenen Waren. Zu diesem Zweck sind derartige Unterfahr-Shuttle zum einen mit einem Fahrzeugkörper mit daran vorgesehenen Rädern und zum anderen mit einer höhenverlagerbaren Lastaufnahme-Plattform oder Ladefläche ausgerüstet.

Zur Aufnahme der genannten Typ von Lasten und insbesondere Ladungsträgern werden diese entweder im Fall von Tischen direkt oder im Fall von Paletten oder Tablaren in einer Übergabestation von einem entsprechenden Unterfahr-Shuttle unterfahren und die Ladefläche bzw. Lastaufnahme-Plattform an der Oberseite des Unterfahr-Shuttles wird angehoben, bis die Last von dem Untergrund oder der Übergabestation abgehoben ist, auf dem Unterfahr-Shuttle getragen wird und dann an einen vorgesehenen Ort transportiert und erneut übergeben oder abgestellt werden kann. Zum Zweck des Transports der genannten Lasten sind gattungsgemäße Unterfahr-Shuttle in der Regel zu einer omnidirektionalen Fortbewegung eingerichtet und werden über ein Leitsystem hinsichtlich ihres Betriebs koordiniert und angesteuert.

Da der konkrete Typ von auf solchen Unterfahr-Shuttles getragenen Lastträgern einen Einfluss auf diverse Arbeitsabläufe und/oder Betriebsparameter des Unterfahr-Shuttles haben kann, beispielsweise indem eine Anpassung eines durch Umfeldsensoren aufgespannten Schutzfelds um das Unterfahr-Shuttle herum an die Größe beziehungsweise den Überstand des Lastträgers bezüglich einem Umriss des Unterfahr-Shuttle notwendig sein kann, ist es wünschenswert, einen Typ eines jeweiligen auf einem Unterfahr-Shuttle getragenen Lastträgers automatisch erkennen zu können. Da hierbei sicherheitsrelevante Betriebsparameter des entsprechenden Unterfahr-Shuttles betroffen sind, ist es hierbei ferner wünschenswert, die entsprechende Erkennung in einer Weise auszuführen, die fehlerhafte Bestimmungen von Typen von Lastträgern mit einer hohen Zuverlässigkeit ausschließen kann. Ferner ist es selbstverständlich ebenfalls wünschenswert, eine entsprechende Vorrichtung zur Erfassung unterschiedlicher Typen von Ladungsträgern kostengünstig und in einer einfach zu installierenden, wartenden und betreibenden Weise auszuführen.

Des Weiteren ist es insbesondere beim Transport schwerer Lasten unerlässlich, sicherzustellen, dass diese in einer korrekten Ausrichtung und Positionierung auf einem Unterfahr-Shuttle aufgenommen sind, bevor der eigentliche Transportvorgang begonnen wird. Sollte nämlich eine Lastauflage in einer unvorhergesehenen Weise vorliegen, so könnten in gewissen Betriebssituationen, wie beispielsweise schnellen Kurvenfahrten oder einem abrupten Abbremsen, unerwünschte Zustände eintreten, die ein Verrutschen der Ladung oder gar ein Kippen davon hervorrufen könnten. Da die von entsprechenden Unterfahr-Shuttles getragenen Lasten erheblich sein können, ist ein solches Verrutschen oder Kippen eines solchen Ladungsträgers mit einem erheblichen Bergungsaufwand verbunden, der zu einem Betriebsstillstand in der entsprechenden Logistikeinrichtung und hohen Folgekosten führen kann. Somit ist es neben der oben bereits diskutierten Erfassung des getragenen Typs von Ladungsträger ebenfalls unerlässlich, sicherzustellen, dass dieser in einer korrekten Positionierung und Ausrichtung auf dem Unterfahr-Shuttle aufgenommen ist, bevor der eigentliche Transport davon begonnen wird. Zudem können an dem Fahrzeug Elemente zur Fixierung der Last in einer Aufnahmeposition vorgesehen sein, wie beispielsweise Rastelemente oder Vertiefungen, die mit der Last wechselwirken und ein Verrutschen der Last während der Fahrt verhindern sollen. Dies ist jedoch nur bei korrekt aufgenommener Last möglich, so dass die Erkennung der korrekten Aufnahmeposition für einen sicheren Transport auch unter diesem Gesichtspunkt von Bedeutung ist. Da hierbei die entsprechenden Schutzfelder von Sensoren aufgespannt werden, die an dem Unterfahr-Shuttle angebracht sind, kann nur bei einer korrekt aufgenommenen und fixierten Last garantiert werden, dass eine Übereinstimmung der für den jeweilig erkannten Ladungsträger vorgesehenen Schutzfelder mit der Außenkontur davon gewährleistet ist.

Es ist demzufolge die Aufgabe der vorliegenden Erfindung, eine Vorrichtung zur Erfassung und Handhabung unterschiedlicher Typen von Ladungsträgern an einem Unterfahr-Shuttle bereitzustellen, welche einerseits eine korrekte Positionierung eines entsprechenden Ladungsträgers auf dem Unterfahr-Shuttle sicherstellen kann und andererseits ebenfalls einen Typ des Ladungsträgers feststellen kann, wobei der Tatsache Rechnung getragen werden soll, dass im praktischen Einsatz eine Vielzahl unterschiedlicher Typen von Ladungsträgern zum Einsatz kommen können, wobei diese Zahl in der Größenordnung von mehreren Dutzend oder gar über 100 liegen kann.

Zu diesem Zweck und zur Lösung der oben formulierten Aufgabe umfasst die erfindungsgemäße Vorrichtung zur Erfassung und Handhabung unterschiedlicher Typen von Ladungsträgern an einem Unterfahr-Shuttle eine erste Sensoranordnung, welche dazu eingerichtet ist, eine korrekte Aufnahme eines Ladungsträgers an einer Lastaufnahme-Plattform des Unterfahr-Shuttles zu erfassen und entsprechende erste Sensordaten auszugeben, eine zweite Sensoranordnung, welche von einem anderen Sensortyp als die erste Sensoranordnung und dazu eingerichtet ist, Informationen bezüglich des Typs des Ladungsträgers zu erfassen und entsprechende zweite Sensordaten auszugeben, und eine Steuereinheit, welche mit der ersten Sensoranordnung und der zweiten Sensoranordnung betriebsmäßig gekoppelt ist, um die ersten und zweiten Sensordaten zu erhalten, wobei die Steuereinheit dazu eingerichtet ist, bei einer von der ersten Sensoranordnung erfassten korrekten Aufnahme des Ladungsträgers auf Grundlage des erfassten Typs des Ladungsträgers Steuersignale auszugeben, welche dazu vorgesehen sind, wenigstens einen Betriebsparameter des Unterfahr-Shuttles anzupassen.

Durch die Integration zweier unterschiedlicher Sensortypen in einer erfindungsgemäßen Vorrichtung wird es ermöglicht, einerseits spezifisch mit hoher Präzision eine korrekte Ausrichtung einer auf einem Unterfahr-Shuttle getragenen Last zu bestimmen, während andererseits mit Hilfe der zweiten Sensoranordnung eine große Anzahl von unterschiedlichen Typen von Ladungsträgern unterschieden werden können und der angesprochene wenigstens eine Betriebsparameter des Unterfahr-Shuttles entsprechend angepasst werden kann.

Hierbei können sich die unterschiedlichen Typen von Ladungsträgern beispielsweise auf deren Geometrie und insbesondere ihre Außenabmessungen und/oder ihr Gewicht beziehen. Gleichzeitig soll darauf hingewiesen sein, dass bei Ladungsträgern mit nicht quadratischem oder anderweitig bezogen auf sämtliche mögliche Aufnahmekonfigurationen nicht rotationssymmetrischem Umriss in Draufsicht auch mehrere mögliche Orientierungen davon bezüglich des Fahrzeugkörpers des Unterfahr-Shuttles als unterschiedliche Typen von Ladungsträgern im Sinne der vorliegenden Erfindung verstanden werden können. An dieser Stelle soll ferner festgehalten sein, dass wenngleich die oben bereits angesprochene und weiter unten noch eingehend diskutierte Anpassung eines Schutzfelds als Beispiel einer Anpassung wenigstens eines Betriebsparameters des Unterfahr-Shuttles aufzufassen ist, hier doch auch andere Betriebsparameter anpassbar sein können, beispielsweise eine maximal zulässige Geschwindigkeit und/oder Beschleunigung und/oder ein minimal zulässiger Kurvenradius des Unterfahr-Shuttles.

Weiterhin soll an dieser Stelle festgehalten sein, dass bei einem Feststellen einer nicht korrekten Aufnahme eines Ladungsträgers durch die erste Sensoranordnung ebenfalls geeignete Maßnahmen automatisiert eingeleitet werden können, beispielsweise eine Benachrichtigung eines Bedieners oder sogar ein unmittelbares Stilllegen des entsprechenden Fahrzeugs oder alternativ auch ein Abstellen oder Absetzen des entsprechenden Ladungsträgers und ggf. ein Durchführen eines weiteren Versuchs zu dessen korrekter Aufnahme.

Hinsichtlich der Ausgestaltung der ersten Sensoranordnung kann diese in verschiedenen Ausführungsformen der Vorrichtung gemäß der vorliegenden Erfindung wenigstens einen induktiven Sensor und/oder wenigstens einen optischen Sensor umfassen, insbesondere wenigstens eine Lichtschranke, und/oder die erste Sensoranordnung kann positionssensibel im Millimeter-Bereich sein, d.h. dass eine Positionierung des entsprechenden Ladungsträgers mit einer Genauigkeit von weniger als 1 cm bestimmt werden kann. Hierbei kann der angesprochene induktive Sensor mit einem entsprechenden passiven Element an dem Ladungsträger zusammenwirken, beispielsweise einem einfachen metallischen Abschnitt, welcher durch seine Induktivität bei einem Vorliegen in der Nähe des entsprechenden Sensors im Bereich der angegebenen Genauigkeit ein Signal auslösen kann, während ein optischer Sensor und insbesondere eine Lichtschranke in bekannter Weise das Vorliegen eines Ladungsträgers bzw. eines Abschnitts davon in einem vorbestimmten räumlichen Bereich erfasst.

Um die Zuverlässigkeit der Erfassung der korrekten Aufnahme des Ladungsträgers weiter zu verbessern, kann die erste Sensoranordnung wenigstens zwei beabstandete Sensoren umfassen, welche vorzugsweise einander gegenüberliegend, insbesondere schräg gegenüberliegend, an dem Unterfahr-Shuttle angeordnet sein können. Dementsprechend können die wenigstens zwei Sensoren der ersten Sensoranordnung beispielsweise im Bereich einander gegenüberliegender Ecken an der Oberseite des Unterfahr-Shuttles positioniert sein. Alternativ kann die Sensoranordnung eine Erfassung des Ladungsträgers in zwei orthogonalen Raumrichtungen durchführen, beispielsweise durch zwei senkrecht zueinander orientierte optische Messeinrichtungen.

Demhingegen kann die zweite Sensoranordnung beispielsweise eine Einheit zum Auslesen eines dem Ladungsträger zugeordneten passiven oder aktiven Datenträgers umfassen, beispielsweise eine NFC-, RFID-, Bluetooth LE- oder QR-Code-Leseeinheit. Die genannten Beispiele von den Ladungsträgern zuordenbaren passiven und aktiven Datenträgern ermöglichen jeweils eine Kodierung größerer Datenmengen, welche dazu geeignet sind, eine nahezu beliebig große Anzahl von unterschiedlichen Typen von Ladungsträgern unterscheiden und identifizieren zu können. Insbesondere kann die zweite Anordnung dazu eingerichtet sein, wenigstens 10, vorzugsweise wenigstens 100 unterschiedliche Typen von Ladungsträgern unterscheiden zu können, wobei die konkrete Anzahl abhängig ist von der jeweils auf dem entsprechenden ausgewählten Datenträger kodierbaren Datenmenge.

Bevorzugt ist die zweite Sensoreinheit dazu ausgebildet, entsprechende Datenträger mit einer Toleranz von mehr als 1 cm, insbesondere wenigstens 10 cm auszulesen. Hierdurch kann ein gewisser Mindestabstand gewährleistet werden, so dass der zugehörige Ladungsträger nicht auf dem Sensor aufzuliegen hat, um mechanische Belastungen zu vermeiden. Andererseits könnte ein zu großer Detektionsbereich zu fehlerhaften Identifizierungen führen, beispielsweise wenn sich in der zu transportierenden Last noch weitere Datenträger befinden. Das Vorsehen der entsprechenden Toleranz bedeutet ferner, dass die Anordnung eines entsprechenden Datenträgers an dem Ladungsträger oder der Last nicht positionssensibel ist bzw. eine gewisse Toleranz aufweist. Konkret müssten beispielsweise NFC- oder Bluetooth LE-Einheiten nicht bis auf 1 cm genau an dem Ladungsträger platziert werden, um sicher durch das Unterfahr-Shuttle ausgelesen werden zu können. In ähnlicher Weise bedeutet die Toleranz im Fall von Barcodes oder QR-Codes als Datenträgern, dass die optische Einheit zum Auslesen eines solchen Codes diesen in einem Bereich von (1 cm x 1cm + Größe des Codes), insbesondere (10 cm x 10 cm + Größe des Codes) auslesen kann. Weiter bevorzugt ist die zweite Sensoreinheit dazu ausgebildet, verschiedene Datenträger in verschiedenen Rotationspositionen des Ladungsträgers bzw. der Last relativ zu dem Unterfahr-Shuttle auszulesen. Da das Unterfahr-Shuttle und/oder der Ladungsträger in der Regel eine Rotationssymmetrie aufweisen, ist die Aufnahme der Last bzw. des Ladungsträgers auf verschiedene Weisen möglich. In einem solchen Fall kann vorgesehen werden, dass verschiedene Datenträger an der Last bzw. dem Ladungsträger vorhanden sind und zumindest eine zweite Sensoreinheit an dem Unterfahr-Shuttle angeordnet ist. Hierbei wird die Reichweite der Datenverbindung bzw. die Technologie der Datenübertragung zwischen zweiter Sensoreinheit und Datenträger so gewählt, dass je nach Orientierung von Last und Unterfahr-Shuttle lediglich genau ein Datenträger ausgelesen wird und hieraus die relative Orientierung ableitbar ist, beispielsweise entspricht ein Ladungsträger von einem Typ A mit Abmessungen von 300 mm x 400 mm bei einer Drehung um 90° einem Ladungsträger mit Abmessungen von 400 mm x 300 mm.

Hierbei sei an dieser Stelle ebenfalls festgehalten, dass auf den genannten passiven oder aktiven Datenträgern beispielsweise unmittelbar geometrische Daten und/oder beispielsweise auch das zulässige Gewicht des entsprechenden Ladungsträgers kodiert sein können, was prinzipiell eine Unterscheidung beliebiger Anzahlen von Ladungsträgern ermöglicht, während andererseits auch denkbar wäre, eine Kennung einer bestimmten Bauart von Ladungsträgern oder eine Typen-ID des Ladungsträgers vorzuhalten, welche mit in einem der Steuereinheit zugeordneten Datenspeicher hinterlegten Typendaten verglichen werden können, um daraus die benötigten Informationen über den entsprechenden Typ von Ladungsträger ableiten zu können.

Gemäß einem weiteren Aspekt betrifft die vorliegende Erfindung ein Unterfahr-Shuttle, umfassend einen Fahrzeugkörper mit einer Mehrzahl von Rädern, eine gegenüber dem Fahrzeugkörper vertikal verlagerbare Lastaufnahme-Plattform, eine Vorrichtung zur Erfassung und Handhabung unterschiedlicher Typen von Ladungsträgern an dem Unterfahr-Shuttle der eben beschriebenen erfindungsgemäßen Art, sowie eine zentrale Steuereinheit, wobei die zentrale Steuereinheit des Unterfahr-Shuttles mit der Steuereinheit der Vorrichtung betriebsmäßig gekoppelt oder integriert ist. Somit kann die Funktionalität der Steuereinheit der Vorrichtung auch unmittelbar von der zentralen Steuereinheit des Unterfahr-Shuttles bereitgestellt werden oder es kann auf eine Lösung mit verteilter Hardware zurückgegriffen werden, welche einen erhöhten Grad von Modularisierung erlauben kann, wobei dann die beiden eben genannten Steuereinheiten in kommunikativer Verbindung miteinander stehen.

Wie bereits weiter oben angedeutet, kann das erfindungsgemäße Unterfahr-Shuttle wenigstens eine Scanner-Einheit umfassen, welche dazu eingerichtet ist, ein Schutzfeld in der Umgebung des Unterfahr-Shuttles auf das Vorliegen von Objekten zu überwachen, wobei die zentrale Steuereinheit des Unterfahr-Shuttles oder eine mit der zentralen Steuereinheit gekoppelte weitere Steuereinheit, beispielsweise eines dedizierten Sicherheitssystems, dazu eingerichtet sein kann, dieses Schutzfeld auf Grundlage des erfassten Typs von Ladungsträger anzupassen. Dies ist bereits aus geometrischen Gründen notwendig, da typischerweise die aufgenommenen Ladungsträger über den Grundriss des Unterfahr-Shuttles hinausstehen. Derartige Schutzfelder können zudem zusätzlich an unterschiedliche Betriebsparameter des Fahrzeugs anpassbar sein, beispielsweise ihre Geschwindigkeit oder ihre momentane Fortbewegungsrichtung.

Hierbei dient die angesprochene wenigstens eine Scanner-Einheit in dieser Weise dazu, Kollisionen mit beweglichen und unbeweglichen Objekten zu verhindern und stellt eine essentielle Sicherheitseinrichtung derartiger Unterfahr-Shuttle dar. Zu diesem Zweck kann beispielsweise auf LIDAR-Sensoren zurückgegriffen werden, welche in Kombination mit einer Überwachung der Geschwindigkeit und der Lenkung des Unterfahr-Shuttles zum Einsatz kommen. Dementsprechend kann in der eben beschriebenen erfindungsgemäßen Ausführung eines Unterfahr-Shuttles eine dedizierte Geometrie derartiger Schutzfelder abhängig von der jeweiligen Geometrie des momentan getragenen Ladungsträgers initialisiert werden und während des Betriebs des Unterfahr-Shuttles können die korrekten und korrelierten Felder aktiviert und überwacht werden. Insbesondere kann in diesem Zusammenhang vorgesehen sein, dass Abmessungen, Masse, zulässige Gesamtmasse oder sonstige Parameter des Ladungsträgers oder der Last auf dem Datenträger gespeichert werden und hieraus durch das Unterfahr-Shuttle die Betriebsparameter ermittelt werden, oder dass direkt die für den Transport vorgesehenen Betriebsparameter des Unterfahr-Shuttles, wie Geschwindigkeits- und/oder Beschleunigungsgrenzwerte und/oder Schutzfeldabmessungen auf dem Datenträger gespeichert sind. Dies stellt eine deutliche Verbesserung der oben erläuterten Sicherheitsfunktion gegenüber bisher bekannten Ausführungen von Unterfahr-Shuttles aus dem Stand der Technik dar, in welchen die Form und Größe der Schutzfelder sowie beispielsweise auch Geschwindigkeits- und Lenkungsgrenzwerte lediglich für einen einzelnen vorgesehenen Lastentyp vorgesehen waren und ein aufwändiges Umkonfigurieren der entsprechenden Scanner-Einheiten sowie der internen Sicherheitsanwendung des Unterfahr-Shuttles notwendig waren, bis hin zu einer Änderung des Source-Codes, der von den entsprechenden Steuereinheiten ausgeführt worden ist, wenn ein solches Unterfahr-Shuttle einen abweichenden Typ von Ladungsträger transportieren sollte.

Alternativ oder zusätzlich zu der eben angesprochenen Anpassung eines Schutzfelds wenigstens einer Scanner-Einheit auf Grundlage des erfassten Typs des Ladungsträgers kann der entsprechende wenigstens eine anzupassende Betriebsparameter eine maximale Geschwindigkeit, eine maximale Beschleunigung, einen minimalen Kurvenradius und/oder eine maximale Querbeschleunigung des Unterfahr-Shuttles umfassen, mittels welcher für die unterschiedlichen Typen von Ladungsträgern jeweils in jeder Betriebssituation des Fahrzeugs ein sicherer Transport der Last gewährleistet wird.

Weiterhin ist denkbar, an dem erfindungsgemäßen Unterfahr-Shuttle wenigstens eine weitere Sensoreinheit zur Bestimmung eines weiteren Zustandsparameters des Ladungsträgers, des Unterfahr-Shuttles oder seiner Umgebung vorzusehen, beispielsweise eine Gewicht-Sensoreinheit, welche dazu eingerichtet ist, ein Gewicht eines aufgenommenen Ladungsträgers zu bestimmen, wobei die zentrale Steuereinheit ferner dazu eingerichtet sein kann, bei der Anpassung des wenigstens einen Betriebsparameters des Unterfahr-Shuttles zusätzlich den wenigstens einen weiteren Zustandsparameter zu berücksichtigen. Dementsprechend können bei einer solchen Ausführungsform die genannten Betriebsparameter, wie beispielsweise maximale Geschwindigkeit oder maximale Beschleunigung, anhand sowohl des Typs des Ladungsträgers als auch des zusätzlich erfassten weiteren Zustandsparameters angepasst werden.

Weiterhin betrifft die vorliegende Erfindung ein System, gebildet aus einem Unterfahr-Shuttle der eben beschriebenen Art und einer Mehrzahl von Ladungsträgern unterschiedlicher Typen, welche jeweils dazu eingerichtet sind, auf der Lastaufnahme-Plattform des Unterfahr-Shuttles aufnehmbar und transportierbar zu sein, wobei jedem der Ladungsträger wenigstens ein passiver oder aktiver Datenträger zugeordnet ist, auf welchem Informationen bezüglich des Typs des Ladungsträgers kodiert sind. Erneut kann es sich hierbei entweder um unmittelbar gespeicherte Daten zu dem Typ des Ladungsträgers handeln, beispielsweise geometrische Abmessungen und/oder ein Gewicht davon, oder es kann eine Typen-ID oder eine eindeutige Kennung des Ladungsträgers kodiert sein, aus welcher die Steuereinheit der in dem Unterfahr-Shuttle vorgesehenen erfindungsgemäßen Vorrichtung mittels eines Datenbankabgleichs die entsprechenden Informationen ableiten kann. Hierbei könnte insbesondere vorgesehen sein, dass der entsprechende Datenträger jedes der Ladungsträger eine eindeutige Kennung kodiert, also beispielsweise einen alphanumerischen Code, welcher lediglich ein einzelnes Mal vergeben wird, und demzufolge eine 1:1 -Zuordnung zu dem jeweiligen Ladungsträger ermöglicht.

Gemäß einem weiteren Aspekt betrifft die vorliegende Erfindung ein Verfahren zur Erfassung und Handhabung unterschiedlicher Typen von Ladungsträgern an einem Unterfahr-Shuttle mittels einer erfindungsgemäßen Vorrichtung der oben beschriebenen Art, ggf. in einem erfindungsgemäßen Unterfahr-Shuttle, umfassend ein Erfassen einer korrekten Aufnahme eines Ladungsträgers an einer Lastaufnahme-Plattform des Unterfahr-Shuttles mittels der ersten Sensoranordnung, ein Erfassen von Informationen bezüglich des Typs des Ladungsträgers mittels der zweiten Sensoranordnung, und bei einer von der ersten Sensoranordnung erfassten korrekten Aufnahme des Ladungsträgers, ein Anpassen von wenigstens einem Betriebsparameter des Unterfahr-Shuttles auf Grundlage des Typs des Ladungsträgers.

Wie bereits im Rahmen der Beschreibung des erfindungsgemäßen Unterfahr-Shuttles ausgeführt wurde, kann der wenigstens eine Betriebsparameter des Unterfahr-Shuttles ein Schutzfeld in der Umgebung des Unterfahr-Shuttles, eine maximale Geschwindigkeit, eine maximale Beschleunigung, einen minimalen Kurvenradius und/oder eine maximale Querbeschleunigung des Unterfahr-Shuttles umfassen.

Weiterhin kann das Erfassen von Informationen bezüglich des Typs des Ladungsträgers in einer redundanten Weise erfolgen, entweder mittels redundanter Hardware, also insbesondere durch Verwendung einer Mehrzahl von der zweiten Sensoranordnung zugehörigen Leseeinheiten und/oder durch redundantes, also mehrfaches Kodieren der entsprechenden Informationen auf dem wenigstens einen dem Ladungsträger zugeordneten Datenträger. Hierdurch werden fehlerhafte Identifikationen von Ladungsträger sicher ausgeschlossen und es kann beispielsweise bei nicht konsistenten Erfassungen durch die wenigstens zwei Leseeinheiten der Betrieb des Fahrzeugs gestoppt und eine entsprechende Fehlermeldung an einen Bediener ausgegeben werden.

Als weitere Sicherheitsmaßnahme kann das Erfassen von Informationen bezüglich des Typs des Ladungsträgers ferner ein Validieren der erfassten Informationen umfassen. Hierdurch kann eine unautorisierte Modifikation oder Vervielfältigung eines der hier verwendeten Ladungsträger unterbunden werden, was im vorliegenden Anwendungsfall dazu beiträgt, sicherheitsrelevante Parameter gegen eine derartige Manipulation zu schützen. Insbesondere kann zu diesem Zweck bereits in der Produktion der Ladungsträger eine Verifizierung erfolgen, dass die auf dem entsprechenden Datenträger kodierten Daten zu dem Typ des Ladungsträgers passen, woraufhin dann eine sog. "Validation Flag" auf den Datenträger geschrieben werden kann. Als Validierung der erfassten Informationen im Rahmen des erfindungsgemäßen Verfahrens können dann von der Steuereinheit des entsprechenden Fahrzeugs lediglich Datenträger akzeptiert werden, die dieses Validation Flag aufweisen. Technisch kann dies beispielsweise derart umgesetzt werden, dass mittels einer lediglich in der Produktion sowie der Steuerung bekannten Logik auf der Basis eines privaten Schlüssels Hash-Werte berechnet werden, die auf der eindeutigen Kennung des entsprechenden Ladungsträgers aufbauen und zur Validierung des entsprechenden Ladungsträgers ausgewertet werden können.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Fig. 1: eine schematische Prinzipansicht eines aus einem Unterfahr-Shuttle und einer Mehrzahl von unterschiedlichen Ladungsträgern gebildeten Systems;
- Fig. 2: eine Draufsicht auf das Unterfahr-Shuttle aus Fig. 1;
- Fig. 3: die Komponenten der erfindungsgemäßen Vorrichtung zur Erfassung und Handhabung unterschiedlicher Typen von Ladungsträgern des Unterfahr-Shuttles aus den Figuren 1 und 2 in einer schematischen Ansicht;
- Fig. 4: eine schematische Darstellung einer ersten Variante einer Erfassung eines Typs eines Ladungsträgers an dem Unterfahr-Shuttle aus den Figuren 1 und 2; und
- Fig. 5: eine schematische Ansicht einer zweiten Variante ähnlich derjenigen aus Figur 4.

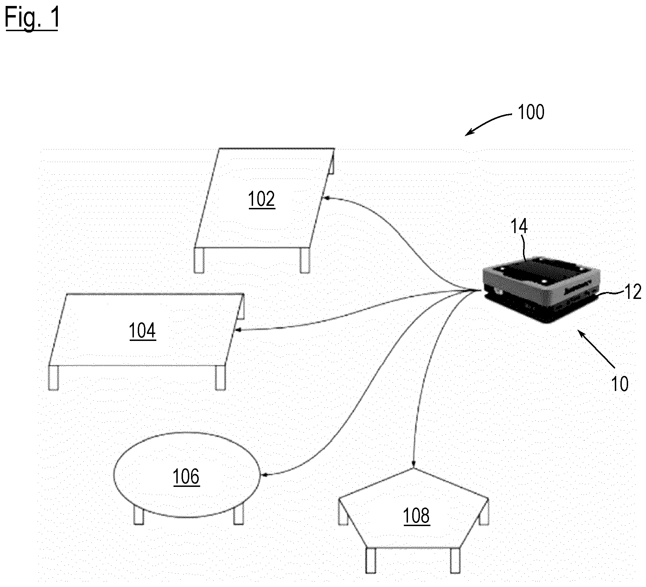

In Figur 1 ist zunächst ein erfindungsgemäßes System 100 schematisch dargestellt, das sich aus einem erfindungsgemäßen Unterfahr-Shuttle 10 und einer Mehrzahl von Ladungsträgern 102 - 108 unterschiedlicher Typen zusammensetzt. Hierbei weisen die Ladungsträger 102 - 108 in Draufsicht abweichende Formen und Außenabmessungen auf, sind jedoch alle als Lasttische ausgestaltet, die direkt von dem Unterfahr-Shuttle 10 unterfahren und angehoben werden können und weisen verschiedene Rotationssymmetrien auf. Es sei darauf hingewiesen, dass als Teil des Systems 100 auch weitere Typen von Ladungsträgern denkbar wären, beispielsweise Paletten oder Tablare, die dann ggf. in einer geeigneten Übergabestation unterfahren werden müssten, da sie selbst keine ausreichende Bauhöhe bezüglich eines Untergrunds aufweisen.

Das Unterfahr-Shuttle 10 umfasst wiederum einen Fahrzeugkörper 12, in welchem unter anderem einige der im Folgenden noch beschriebenen Komponenten aufgenommen sind, sowie beispielsweise ferner ein Antriebssystem, ein Energiespeicher, eine Steuereinheit mit entsprechenden Peripheriegeräten und eine Hubvorrichtung für die Lastaufnahme-Plattform 14, welche bezüglich des Fahrzeugkörpers 12 und damit des Untergrunds höhenverlagerbar und für die Aufnahme der Ladungsträger 102 - 108 eingerichtet ist.

In einer hier nicht dargestellten Variante kann ein entsprechendes Unterfahr-Shuttle eine Schnittstelleneinheit tragen, die für die Aufnahme bestimmter Lastträger ausgebildet ist und die erste und zweite Sensoreinheit umfasst. In einem solchen Fall sind das Unterfahr-Shuttle und die entsprechende Schnittstelleneinheit als strukturelle Einheit anzusehen.

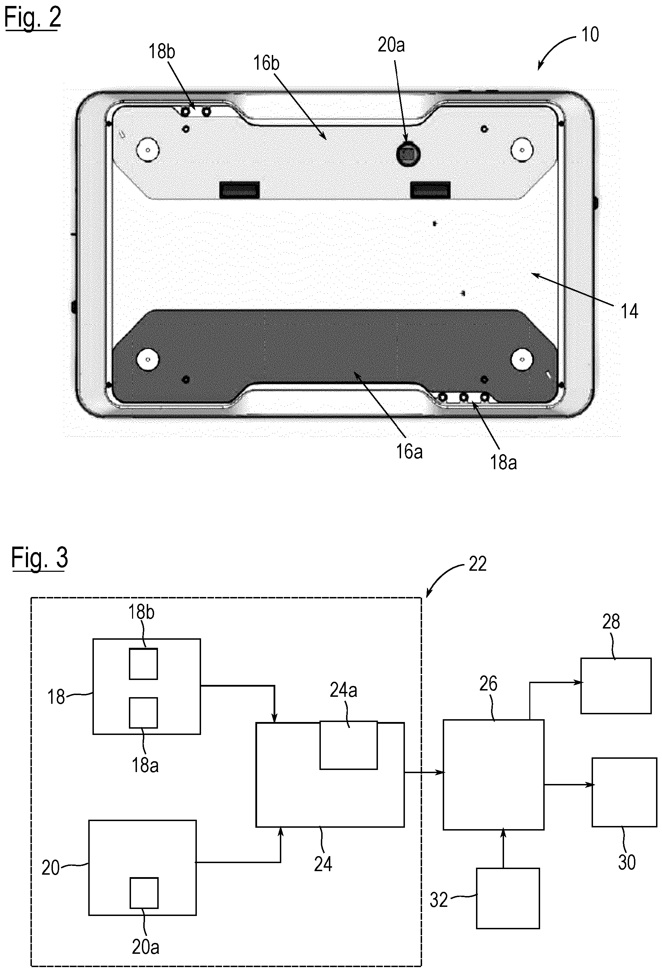

Eine Draufsicht des Unterfahr-Shuttles 10 und damit insbesondere der Oberseite der Lastaufnahme-Plattform 14 ist ferner in Figur 2 dargestellt. Hierbei ist zu erkennen, dass an der Oberseite der Lastaufnahme-Plattform 14 in symmetrischer Weise zwei Auflageabschnitte 16a und 16b vorgesehen sind, von welchen der in Figur 2 untere mit einer Antirutsch-Auflage versehen ist, während aus Gründen der Übersichtlichkeit beim oberen auf die Darstellung dieser Auflage verzichtet wurde. Hierbei können an der Oberseite der Lastaufnahme-Plattform ferner Vorsprünge, Vertiefungen oder ähnliches vorgesehen sein, welche mit entsprechenden Gegenelementen der Ladungsträger 102 - 108 zusammenwirken können, um in einem aufgenommenen Zustand davon eine korrekte Positionierung und Ausrichtung zu begünstigen.

An der Oberseite der Lastaufnahme-Plattform 14 sind ferner zwei Felder von induktiven Sensoren 18a und 18b vorgesehen, welche einander schräg gegenüberliegen. Diese Felder von induktiven Sensoren 18a und 18b bilden jeweils einen Teil einer ersten Sensoranordnung 18, welche weiter unten im Zusammenhang mit Figur 3 noch weiter beschrieben werden wird und dazu dient, eine korrekte Aufnahme eines der Ladungsträger 102 - 108 auf der Lastaufnahme-Plattform 14 zu erfassen. Zu diesem Zweck sind die Ladungsträger 102 - 108 an geeigneten Stellen an ihren Unterseiten mit Gegenelementen versehen, beispielsweise Metallabschnitten und/oder Aussparungen und/oder nichtmetallischen Abschnitten, welche eine Detektion davon mit kurzer Reichweite erlauben, wodurch die angestrebte Präzision der Erfassung im Millimeterbereich ermöglicht wird. Es sei an dieser Stelle darauf hingewiesen, dass alternativ als entsprechende Sensoreinheiten beispielsweise auch optische Sensoren eingesetzt werden könnten, insbesondere Lichtschranken, mittels welchen eine derart präzise Erfassung einer korrekten Aufnahme der Ladungsträger 102 - 108 ebenfalls möglich ist. Weiterhin sei darauf hingewiesen, dass anstelle der in diesem Beispiel verwendeten zwei gegenüberliegenden Feldern von Sensoren 18a und 18b auch eine andere Zahl von Sensoren zu diesem Zweck als Teil der ersten Sensoranordnung 18 verbaut sein könnten.

Weiterhin ist an der Oberseite der Lastaufnahme-Plattform 14 eine RFID-Leseeinheit 20a vorgesehen, welche einen Teil einer zweiten Sensoranordnung 20 bildet und dazu eingerichtet ist, einen an einer geeigneten Position an den Ladungsträgern 102 - 108 angebrachten RFID-Tag auszulesen, um Informationen bezüglich des Typs des Ladungsträgers zu erfassen, die auf dem RFID-Tag kodiert sind. An dieser Stelle sei darauf hingewiesen, dass ebenfalls andere Technologien für die zweite Sensoranordnung 20 zum Einsatz kommen könnten, beispielsweise eine NFC-, Bluetooth-LE- oder QR-Code-Leseeinheit, wenn die Ladungsträger 102 - 108 entsprechend mit solchen aktiven oder passiven Datenträgern ausgestattet sind. Ferner sind auch Konfigurationen denkbar, in welchen die zweite Sensoranordnung 20 mehr als eine Leseeinheit 20a umfasst, beispielsweise aus Gründen der Redundanz oder Plausibilisierung. In jedem Fall sind die von den genannten Datenträgern kodierbaren Datenmengen ausreichend, um eine für den praktischen Einsatz nahezu unbegrenzte Anzahl von unterschiedlichen Typen von Ladungsträger eindeutig kennzeichnen zu können und auch ihre jeweiligen Reichweiten sind für den eben skizzierten Betrieb geeignet.

Unter Bezugnahme auf Figur 3 sollen anhand des dort dargestellten schematischen Schaubilds die Komponenten einer erfindungsgemäßen Vorrichtung zur Erfassung und Handhabung der unterschiedlicher Typen von Ladungsträgern 102 - 108 des Unterfahr-Shuttles 10 aus den Figuren 1 und 2 erläutert sein. Die Vorrichtung selbst ist in Figur 3 als Ganzes mit dem Bezugszeichen 22 bezeichnet, wobei die Figur 3 ferner weitere Komponenten des Unterfahr-Shuttles 10 zeigt, welche nicht als Komponenten der Vorrichtung 22 zu verstehen sind.

Wie bereits angesprochen, umfasst die Vorrichtung 22 die erste Sensoranordnung 18 mit ihren beiden Feldern von induktiven Sensoren 18a und 18b an der Oberseite des Unterfahr-Shuttles 10 zur Ausgabe von Sensordaten, welche eine korrekte Aufnahme eines der Ladungsträger 102 - 108 an der Lastaufnahme-Plattform 14 anzeigen. In ähnlicher Weise umfasst die Vorrichtung 22 die zweite Sensoranordnung 20 mit ihrer RFID-Leseeinheit 20a, welche Informationen bezüglich des Typs des Ladungsträgers 102 - 108 ausgibt. Die jeweiligen Sensordaten werden hierbei an eine Steuereinheit 24 ausgegeben, welche sie in geeigneter Weise verarbeitet, beispielsweise indem sie von der zweiten Sensoranordnung 20 gelieferte Identifikationsdaten über eine in einem zugeordneten Speicher 24a hinterlegte Nachschlagetabelle einem konkreten Typ von Ladungsträger 102 - 108 zuordnet und auf dieser Grundlage Steuersignale ausgibt, welche dazu vorgesehen sind, wenigstens einen Betriebsparameter des Unterfahr-Shuttles 10 anzupassen. Denkbar ist ebenfalls, dass die Steuereinheit 24 die benötigten Daten für den erfassten Datenträger mittels einer nicht dargestellten drahtlosen Kommunikationsverbindung, wie beispielsweise WLAN, bei einer zentralen Einheit der Logistikeinrichtung abfragt, in welcher das Unterfahr-Shuttle 10 betrieben wird.

Zu diesem Zweck kann die Steuereinheit 24, wie in Figur 3 gezeigt, mit einer zentralen Steuereinheit 26 des Unterfahr-Shuttles 10 kommunikativ gekoppelt sein, während in einer alternativen Variante die Funktionalität der Steuereinheit 24 auch direkt von der zentralen Steuereinheit 26 übernommen werden könnte, so dass hier lediglich eine einzelne Hardware einzusetzen wäre, wie beispielsweise ein geeigneter Mikroprozessor oder Controller.

In jedem Fall kann die zentrale Steuereinheit 26 nun bei einer Erfassung einer korrekten Aufnahme eines Ladungsträgers 102 - 108 durch die erste Sensoreinheit 18 auf Grundlage der Steuersignale von der Steuereinheit 24 der Vorrichtung 22 den Betrieb von verschiedenen Komponenten des Unterfahr-Shuttles 10 anpassen, beispielsweise eines hier lediglich schematisch dargestellten Antriebssystems 28 hinsichtlich einer maximal zulässigen Geschwindigkeit, Beschleunigung oder Querbeschleunigung oder einem maximal zulässigen Kurvenradius.

Alternativ oder zusätzlich kann ein Schutzfeld wenigstens einer Scanner-Einheit 30 auf Grundlage des erfassten Typs von Ladungsträger 102 - 108 angepasst werden, wobei hier insbesondere der Umriss eines solchen Ladungsträgers 102 - 108 zu berücksichtigen wäre. Hierbei sei darauf hingewiesen, dass in einer hier nicht gezeigten weiteren Variante auch zur Anpassung der Schutzfelder eine zusätzliche eigene Steuereinheit vorgesehen sein kann, welche einen Teil eines dedizierten Sicherheitssystems des Unterfahr-Shuttles 10 bilden kann und ebenfalls in kommunikativer Verbindung mit der zentralen Steuereinheit 26 stehen würde.

Demhingegen können bei einer nicht erfolgten Erfassung einer korrekten Aufnahme eines Ladungsträgers 102 - 108 in einem Betriebszustand, in welchem eine derartige Aufnahme vorgesehen wäre, ebenfalls geeignete Maßnahmen ergriffen werden, beispielsweise eine Benachrichtigung eines menschlichen Bedieners über geeignete Kommunikations- und/oder Anzeigemittel und/oder eine vorrübergehende Stilllegung des Unterfahr-Shuttles 10 als Ganzes.

Weiterhin sei darauf hingewiesen, dass wenigstens eine weitere Sensoreinheit 32 in dem Unterfahr-Shuttle 10 umfasst sein kann, beispielsweise eine Gewicht-Sensoreinheit, welche ein Gewicht eines aufgenommenen Ladungsträgers 102 - 108 detektiert. Die derart ermittelten Daten können von der zentralen Steuereinheit 26 ebenfalls bei der Anpassung des wenigstens einen Betriebsparameters berücksichtigt werden.

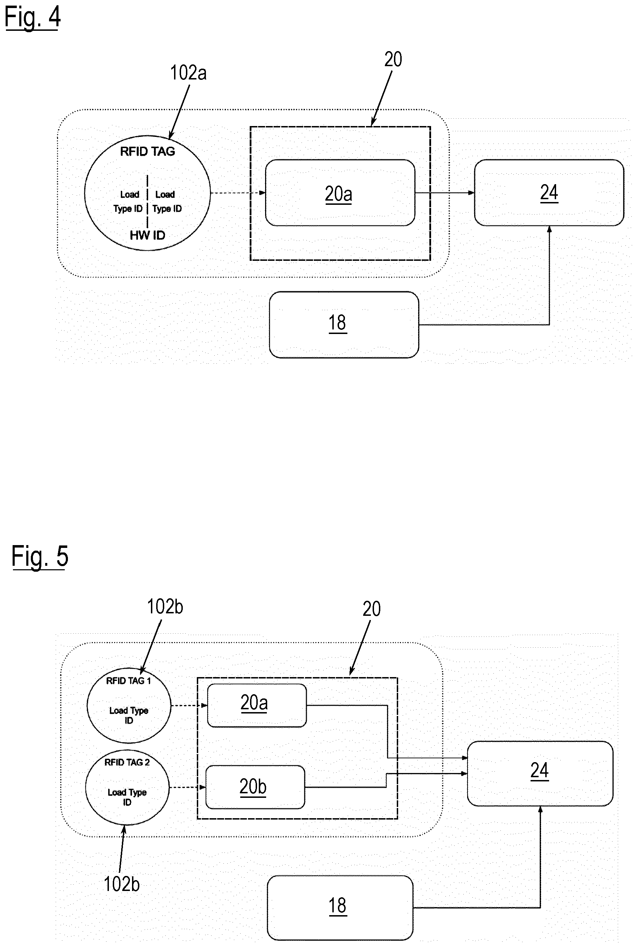

Unter Bezugnahme auf die Figuren 4 und 5 sollen nun zuletzt zwei konkrete Ausführungsbeispiele von Varianten einer Erfassung eines Typs eines Ladungsträgers 102 - 108 an dem Unterfahr-Shuttle aus den Figuren 1 und 2 mithilfe der Vorrichtung 22 aus Figur 3 erläutert sein. Hierbei zeigt die Figur 4 ein Beispiel entsprechend demjenigen aus den Figuren 2 und 3, in welchen lediglich eine einzelne RFID-Leseeinheit 20a verwendet wird, während in der alternativen Variante aus Figur 5 auf zwei derartige Leseeinheiten 20a, 20b zurückgegriffen wird. Aus Gründen der Lesbarkeit wird an dieser Stelle der erste Ladungsträger 102 aus Figur 1 als Beispiel verwendet.

Hierbei sind in der Variante aus Figur 4 auf dem dem entsprechenden Ladungsträger 102 zugeordneten RFID-Tag 102a insgesamt drei Datenabschnitte vorgesehen, von welchen zwei unabhängig und redundant eine Typen-Kennung (Load Type ID) des entsprechenden Typs von Ladungsträger 102 kodieren, während der verbleibende dritte Datenabschnitt eine eindeutige Hardware-Kennung (HW ID) des konkreten Ladungsträgers 102 kodiert. In diesem Fall verarbeitet die zweite Sensoreinheit 20 die erste Typen-Kennung zusammen mit der Hardware-Kennung und dann in einem zweiten Schritt die andere Typen-Kennung ebenfalls zusammen mit der Hardware-Kennung. Hiernach wird beispielsweise von der Steuereinheit 24 verglichen, ob die beiden Typen-Kennungen übereinstimmen und von demselben Ladungsträger 102 gelesen wurde, indem zusätzlich die in den beiden Schritte ausgelesenen Hardware-Kennungen verglichen werden. Parallel zu diesem Datenstrom von der zweiten Sensoranordnung 20 wird ein weiterer Datenstrom von der Steuereinheit 24 verarbeitet, welcher von der ersten Sensoranordnung 18 stammt und eine korrekte Aufnahme des Ladungsträgers 102 auf dem Unterfahr-Shuttle 10 betrifft.

In der alternativen Variante aus Figur 5 werden neben dem Datenstrom von der ersten Sensoranordnung 18 unabhängig voneinander zwei RFID-Tags 102b an dem Ladungsträger 102 von separaten und ausreichend beabstandeten RFID Lesegeräten 20a, 20b ausgelesen, welche jeweils lediglich eine Typen-Kennung kodieren, um eine Redundanz und Plausibilisierung zu erreichen, welche höchsten Sicherheitsstandards genügt. Somit können die beiden in den Figuren 4 und 5 gezeigten Varianten jeweils beispielsweise zur Anpassung von Schutzfeldern in dem Unterfahr-Shuttle 10 abhängig vom Typ eines aufzunehmenden Ladungsträgers verwendet werden, ohne dass hierdurch die Betriebssicherheit des Unterfahr-Shuttles 10 verschlechtert würde.

Bei beiden gezeigten Beispielen in den Figuren 4 und 5 dient das zweimalige Auslesen der Load Type ID der Erhöhung der Sicherheit bzw. dem Erreichen eines vorgegebenen Sicherheitsstandards. Da es sich bei dem Auslesen der Load Type ID bzw. dem Erkennen des Ladungsträgers um eine sicherheitsrelevante Funktionalität handelt, die sich also unmittelbar auf die Betriebssicherheit des Unterfahr-Shuttles 10 auswirkt, ist eine redundante Erkennung des Ladungsträgertyps notwendig.

Weiterhin sei darauf hingewiesen, dass auf den RFID-Tags 102a, 102b ein weiterer Datenabschnitt vorgesehen sein kann, welcher als Validation Flag dient, wobei die Steuereinheit 24 in diesem Zusammenhang lediglich Ladungsträger 102 - 108 akzeptieren wird, auf deren RFID-Tags 102a, 102b ein gültiger Validation Flag kodiert ist. Diese können bereits in der Produktion des jeweiligen Ladungsträgers 102 - 108 mittels geeigneter kryptografischer Verfahren erzeugt und dann während des Auslesens des entsprechenden RFID-Tags 102a, 102b von der Steuereinheit 24 validiert werden, beispielsweise anhand eines an sich bekannten Hashing-Verfahrens.

## Patentansprüche

1. Vorrichtung (22) zur Erfassung und Handhabung unterschiedlicher Typen von Ladungsträgern (102 - 108) an einem Unterfahr-Shuttle (10), umfassend:
- eine erste Sensoranordnung (18), welche dazu eingerichtet ist, eine korrekte Aufnahme eines Ladungsträgers (102 - 108) an einer Lastaufnahme-Plattform (14) des Unterfahr-Shuttles (10) zu erfassen und entsprechende erste Sensordaten auszugeben;
- eine zweite Sensoranordnung (20), welche von einem anderen Sensortyp als die erste Sensoranordnung (18) und dazu eingerichtet ist, Informationen bezüglich des Typs des Ladungsträgers (102 - 108) zu erfassen und entsprechende zweite Sensordaten auszugeben; und
- eine Steuereinheit (24), welche mit der ersten Sensoranordnung (18) und der zweiten Sensoranordnung (20) betriebsmäßig gekoppelt ist, um die ersten und zweiten Sensordaten zu erhalten,
wobei die Steuereinheit (24) dazu eingerichtet ist, bei einer von der ersten Sensoranordnung (18) erfassten korrekten Aufnahme des Ladungsträgers (102 - 108) auf Grundlage des erfassten Typs des Ladungsträgers (102 - 108) Steuersignale auszugeben, welche dazu vorgesehen sind, wenigstens einen Betriebsparameter des Unterfahr-Shuttles (10) anzupassen.

2. Vorrichtung (22) nach Anspruch 1,
wobei die erste Sensoranordnung (18) wenigstens einen induktiven Sensor (18a, 18b) und/oder wenigstens einen optischen Sensor, insbesondere wenigstens eine Lichtschranke, umfasst, und/oder
wobei die erste Sensoranordnung (18) positionssensibel im Millimeter-Bereich ist.

3. Vorrichtung (22) nach Anspruch 1 oder 2,
wobei die erste Sensoranordnung (18) wenigstens zwei beabstandete Sensoren (18a, 18b) umfasst, welche vorzugsweise einander gegenüberliegend, insbesondere schräg gegenüberliegend, an dem Unterfahr-Shuttle (10) angeordnet sind.

4. Vorrichtung (22) nach einem der vorhergehenden Ansprüche,
wobei die zweite Sensoranordnung (20) eine Einheit zum Auslesen eines dem Ladungsträger zugeordneten passiven oder aktiven Datenträgers umfasst, beispielsweise einen NFC-, RFID- (20a), Bluetooth LE- oder QR-Code-Leseeinheit.

5. Vorrichtung (22) nach einem der vorhergehenden Ansprüche,
wobei die zweite Sensoranordnung (20) dazu eingerichtet ist, wenigstens 10, vorzugsweise wenigstens 100 unterschiedliche Typen von Ladungsträgern (20a)unterscheiden zu können.

6. Unterfahr-Shuttle (10), umfassend:
- einen Fahrzeugkörper (12) mit einer Mehrzahl von Rädern;
- eine gegenüber dem Fahrzeugkörper (12) vertikal verlagerbare Lastaufnahme-Plattform (14);
- eine Vorrichtung (22) zur Erfassung und Handhabung unterschiedlicher Typen von Ladungsträgern an dem Unterfahr-Shuttle nach einem der vorhergehenden Ansprüche; und
- eine zentrale Steuereinheit (26);
wobei die zentrale Steuereinheit (26) des Unterfahr-Shuttles (10) mit der Steuereinheit (24) der Vorrichtung (22) betriebsmäßig gekoppelt oder integriert ist.

7. Unterfahr-Shuttle (10) nach dem vorhergehenden Anspruch,
ferner umfassend wenigstens eine Scanner-Einheit (30), welche dazu eingerichtet ist, ein Schutzfeld in der Umgebung des Unterfahr-Shuttles (10) auf das Vorliegen von Objekten zu überwachen, wobei die zentrale Steuereinheit (26) des Unterfahr-Shuttles (10) oder eine mit der zentralen Steuereinheit (26) gekoppelte weitere Steuereinheit dazu eingerichtet ist, das Schutzfeld auf Grundlage des erfassten Typs von Ladungsträger (102 - 108) anzupassen.

8. Unterfahr-Shuttle (10) nach einem der Ansprüche 6 und 7,
wobei der auf Grundlage des erfassten Typs des Ladungsträgers (102 - 108) anzupassende wenigstens eine Betriebsparameter eine maximale Geschwindigkeit, eine maximale Beschleunigung, einen minimalen Kurvenradius und/oder eine maximale Querbeschleunigung des Unterfahr-Shuttles (10) umfasst.

9. Unterfahr-Shuttle (10) nach einem der Ansprüche 6 bis 8,
ferner umfassend wenigstens eine weitere Sensoreinheit (32) zur Bestimmung eines weiteren Zustandsparameters des Ladungsträgers (102 - 108), des Unterfahr-Shuttles (10) oder seiner Umgebung, beispielsweise eine Gewicht-Sensoreinheit, welche dazu eingerichtet ist, ein Gewicht eines aufgenommenen Ladungsträgers (102 - 108) zu bestimmen, wobei die zentrale Steuereinheit (26) ferner dazu eingerichtet ist, bei der Anpassung des wenigstens einen Betriebsparameters des Unterfahr-Shuttles (10) zusätzlich den wenigstens einen weiteren Zustandsparameter zu berücksichtigen.

10. System (100), gebildet aus einem Unterfahr-Shuttle (10) nach einem der Ansprüche 6 bis 9 und einer Mehrzahl von Ladungsträgern (102 - 108) unterschiedlicher Typen, welche jeweils dazu eingerichtet sind, auf der Lastaufnahme-Plattform (14) des Unterfahr-Shuttles (10) aufnehmbar und transportierbar zu sein,
wobei jedem der Ladungsträger (102 - 108) wenigstens ein passiver oder aktiver Datenträger (102a, 102b) zugeordnet ist, auf welchem Informationen bezüglich des Typs des Ladungsträgers (102 - 108) kodiert sind.

11. System (100) nach Anspruch 10,
wobei der Datenträger (102a, 102b) jedes der Ladungsträger (102 - 108) eine eindeutige Kennung kodiert.

12. Verfahren zur Erfassung und Handhabung unterschiedlicher Typen von Ladungsträgern (102 - 108) an dem Unterfahr-Shuttle (10) mittels einer Vorrichtung (22) nach einem der Ansprüche 1 bis 5, ggf. in einem Unterfahr-Shuttle (10) nach einem der Ansprüche 6 bis 9, umfassend:
- Erfassen einer korrekten Aufnahme eines Ladungsträgers (102 - 108) an einer Lastaufnahme-Plattform (14) des Unterfahr-Shuttles (10) mittels der ersten Sensoranordnung (18);
- Erfassen von Informationen bezüglich des Typs des Ladungsträgers (102 - 108) mittels der zweiten Sensoranordnung (20); und
- bei einer von der ersten Sensoranordnung (18) erfassten korrekten Aufnahme des Ladungsträgers (102 - 108), Anpassen von wenigstens einem Betriebsparameter des Unterfahr-Shuttles auf Grundlage des Typs des Ladungsträgers (102 - 108).

13. Verfahren nach Anspruch 12,
wobei der wenigstens eine Betriebsparameter des Unterfahr-Shuttles (10) ein Schutzfeld in der Umgebung des Unterfahr-Shuttles (10), eine maximale Geschwindigkeit, eine maximale Beschleunigung, einen minimalen Kurvenradius und/oder eine maximale Querbeschleunigung des Unterfahr-Shuttles (10) umfasst.

14. Verfahren nach Anspruch 12 oder 13,
wobei das Erfassen von Informationen bezüglich des Typs des Ladungsträgers (102 - 108) in einer redundanten Weise mittels einer Mehrzahl von der zweiten Sensoranordnung (20) zugehörigen Leseeinheiten (20a) und/oder durch mehrfaches Kodieren der Informationen auf dem wenigstens einen dem Ladungsträger (102 - 108) zugeordneten Datenträger (102a, 102b) erfolgt.

15. Verfahren nach einem der Ansprüche 12 bis 14,
wobei das Erfassen von Informationen bezüglich des Typs des Ladungsträgers (102 - 108) ferner ein Validieren der erfassten Informationen umfasst.
